(19) Europäisches Patentamt

European Patent Office

Office européen des brevets

(11) **EP 2 205 469 B1**

(12) **EUROPÄISCHE PATENTSCHRIFT**

(45) Veröffentlichungstag und Bekanntmachung des Hinweises auf die Patenterteilung:
**27.04.2011  Patentblatt 2011/17**

(21) Anmeldenummer: **08842921.2**

(22) Anmeldetag: **22.10.2008**

(51) Int Cl.:
***B60T 8/40*** ^(2006.01)

(86) Internationale Anmeldenummer:
**PCT/EP2008/064284**

(87) Internationale Veröffentlichungsnummer:
**WO 2009/053389 (30.04.2009 Gazette 2009/18)**

(54) **VERFAHREN UND VORRICHTUNG ZUR KALIBRIERUNG ODER DIAGNOSE EINER KRAFTFAHRZEUGBREMSANLAGE MIT EINER GETAKTET BETRIEBENEN PUMPE**

METHOD AND DEVICE FOR THE CALIBRATION OR DIAGNOSIS OF A MOTOR VEHICLE BRAKE SYSTEM HAVING A CYCLICALLY OPERATED PUMP

PROCÉDÉ ET DISPOSITIF POUR ÉTALONNER OU DIAGNOSTIQUER UN SYSTÈME DE FREINAGE D'UN VÉHICULE AUTOMOBILE AVEC UNE POMPE FONCTIONNANT DE MANIÈRE CADENCÉE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **24.10.2007  DE 102007050662**

(43) Veröffentlichungstag der Anmeldung:
**14.07.2010  Patentblatt 2010/28**

(73) Patentinhaber: **Continental Teves AG & Co. oHG 60488 Frankfurt (DE)**

(72) Erfinder:
• **ATTALLAH, Faouzi 64283 Darmstadt (DE)**
• **ROBERT, Tom 34119 Kassel (DE)**
• **SCHELLER, Tobias 36145 Hofbieber (DE)**

(56) Entgegenhaltungen:
WO-A-2005/007475          DE-A1- 10 049 506
DE-A1- 19 651 154          DE-A1- 19 961 293
DE-A1-102005 041 556          US-A- 6 092 992
US-A1- 2005 069 418

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung bezieht sich auf ein Verfahren und auf eine Vorrichtung zur Kalibrierung oder Diagnose einer Kraftfahrzeugbremsanlage mit einer getaktet betriebenen Pumpe.

Eine derartige Kraftfahrzeugbremsanlage ist üblicherweise mit zwei Zweiwegeventilen versehen, über deren wechselseitiges Schalten ein Blockieren der Räder eines Kraftfahrzeuges vermieden wird. Die Ansteuerung der Zweiwegeventile erfolgt üblicherweise mittels einer als so genannter Mikrocontroller ausgebildeten Steuereinheit. Details zur Funktion einer Kraftfahrzeugbremsanlage sind beispielsweise dem Fachbuch von Dubbel, Taschenbuch für den Maschinenbau, Springer Verlag, Heidelberg, 20. Aufl. 2001, ISBN 3-540-67777-1, Abschnitt Q / Fahrzeugtechnik zu entnehmen. Bei einer derartigen Kraftfahrzeugbremsanlage ist üblicherweise eine Pumpe zum Umpumpen von Bremsflüssigkeit vorgesehen. Eine optimierte Ansteuerung der beiden Zweiwegeventile und damit ein optimierter Bremsvorgang ist erreichbar, indem die beiden Zweiwegeventile in Abhängigkeit des Bremsleitungsdrucks zwischen einem Hauptbremszylinder und einem Radbremszylinder einer Radbremse angesteuert werden. Dieser Bremsleitungsdruck ist in der Folge als Vordruck bezeichnet.

Aus der DE 10 2005 041 556 A1 ist ein Verfahren zur Bestimmung eines zwischen einem Hauptbremszylinder und einem Einlassventil eines Radbremszylinders einer Kraftfahrzeugbremsanlage herrschenden Vordrucks bekannt. Verfahrensgemäß wird hierbei der Vordruck unter Berücksichtigung des Verlaufs einer Nachlaufspannung eines getaktet betriebenen Motors der Pumpe bestimmt. Hierzu werden mehrere Kenngrößen des Spannungsverlaufs gemessen und jeweils zur Bestimmung eines Vordruckwertes herangezogen, wobei eine Bewertung der Qualität und/oder Zuverlässigkeit der gemessenen Kenngrößen, eine Filterung und/oder Aufbereitung der Kenngrößen und/oder der daraus bestimmten Vordruckwerte bei mangelnder Qualität und/oder Zuverlässigkeit der gemessenen Kenngrößen, eine Mittelung der aus den verschiedenen Kenngrößen bestimmten Vordruckwerte stattfindet, wobei nur Druckwerte von ähnlicher Größe berücksichtigt werden und eine zeitliche Mittelung der Vordruckwerte zur Dämpfung von Fluktuationen durchgeführt wird.

Für die Ermittlung des Vordrucks im Betrieb der Pumpe wird eine entsprechend ermittelte Kennlinie in einem Datenspeicher einer die Kraftfahrzeugbremsanlage steuernden Steuereinheit hinterlegt. Nach dem anhand der Kennlinie errechneten Vordruck werden die beiden Zweiwegeventile angesteuert.

Die Durchführung des Verfahrens wird aber dadurch erschwert, dass die Kennlinie für jede einzelne Pumpe und jede einzelne Bremsanlage infolge von Fertigungstoleranzen unterschiedlich ausfällt. Mit zunehmender Betriebsdauer der Pumpe kommen Alterungs- und Verschleißerscheinungen, beispielsweise am Drehlager des Pumpenläufers, hinzu, die die Betriebscharakteristik des Bremssystems beeinflussen.

Die DE 196 51 154 A1 beschreibt ein Verfahren und eine Vorrichtung zur Steuerung einer Bremsanlage, bei welcher aus dem Nachlaufverhalten einer durch einen elektrischen Motor gesteuerten Pumpe Exemplarstreuungen erfasst werden, wobei Fertigungstoleranzen von Motor und Pumpe dadurch berücksichtigt werden, dass die dem Hydroaggregat spezifische Nachlaufzeit am Ende des Produktionsprozesses gelernt und abgespeichert wird. Durch Vergleich mit der erfassten Nachlaufzeit kann auf die Temperatur des Hydroaggregats geschlossen werden. Die gemessene Nachlaufzeit wird ebenfalls in einen Faktor zur Korrektur der Ventilansteuerzeiten für den Druckaufbau und/oder für den Druckabbau umgerechnet, basierend auf einer fahrzeugspezifisch festgelegten Grundnachlaufzeit.

Aufgabe der Erfindung ist es daher, ein einfach durchführbares und gleichzeitig präzises Verfahren zur Kalibrierung oder Diagnose eines Kraftfahrzeugbremssystems mit einer getaktet betriebenen Pumpe anzugeben. Diese Aufgabe wird erfindungsgemäß gelöst durch die Merkmale des Anspruchs 1.

Hierzu wird zunächst für eine Referenzpumpe zumindest ein Parameter, der die elektromotorische Kraft des Referenzpumpenmotors repräsentiert, unter definierten Vorgaben wiederholt (also mehrfach nacheinander) ermittelt. Aus den für die Referenzpumpe ermittelten Werten des Parameters wird eine statistische Kenngröße abgeleitet. Als Referenzpumpe wird hierbei eine Pumpe herangezogen, mit der in der Entwicklungsphase der Bremsanlage im Rahmen eines Prototyps des Fahrzeugbremssystems Referenzmessungen durchgeführt werden. Der betrachtete Parameter wird insbesondere aus der an der Referenzpumpe abfallenden Motorspannung ermittelt. Bei den definierten Vorgaben handelt es sich um ein Set von Testbedingungen, die z.B. den Einbau der Pumpe in einem speziellen Typ einer Kraftfahrzeugbremsanlage, die Temperatur oder die chemische Zusammensetzung der Bremsflüssigkeit betreffen. Eine weitere Vorgabe ist, dass der Parameter in lastfreiem Zustand der Bremsanlage, also bei unbetätigtem Bremspedal ermittelt wird.

In einem weiteren Verfahrensschritt wird derselbe Parameter unter entsprechenden - insbesondere soweit möglich denselben - Vorgaben für eine Betriebspumpe ermittelt. Als Betriebspumpe wird die zu kalibrierende Pumpe bezeichnet, die Bestandteil einer zum Einbau in einem Kraftfahrzeug vorgesehenen oder bereits in das Fahrzeug eingebauten Kraftfahrzeugbremsanlage ist. Die Betriebspumpe und die zugehörige Bremsanlage sind dabei insbesondere typgleich mit der Referenzpumpe bzw. der dieser zugehörigen Bremsanlage. Auch aus den für die Referenzpumpe ermittelten Werten des Parameters wird eine entsprechende statistische Kenngröße abgeleitet.

Verfahrensgemäß wird aus den für die Referenzpumpe bzw. für die Betriebspumpe abgeleiteten Kenngrößen zumindest eine Verhältniszahl errechnet, die als Maß für eine etwaige Abweichung des Betriebsverhaltens der Betriebspumpe zu dem Betriebsverhalten der Referenzpumpe herangezogen wird.

Die Verhältniszahl ist allgemein eine Funktion der für Referenzpumpe und Betriebspumpe ermittelten Kenngrößen. Formal:

$$VZ = g\left(K_{RP}, K_{BP}\right),$$

wobei

- VZ die Verhältniszahl,

- g eine Funktion,

- $K_{RP}$ die für die Referenzpumpe abgeleitete Kenngröße, und

- $K_{BP}$ die für die Referenzpumpe abgeleitete Kenngröße

bezeichnen. Im einfachsten Fall wird die Verhältniszahl als Quotient der Kenngrößen errechnet.

Erfindungsgemäß wird die Verhältniszahl zur Kalibrierung der Betriebspumpe verwendet, indem in Abhängigkeit von dieser Verhältniszahl eine Kennlinie der Betriebspumpe an eine entsprechend vorgegebene Kennlinie der Referenzpumpe angepasst wird. Mit anderen Worten geht die Kennlinie der Betriebspumpe aus der Kennlinie der Referenzpumpe hervor, indem diese Kennlinie der Referenzpumpe mit der Verhältniszahl oder mittels einer von der Verhältniszahl abhängigen Funktion verrechnet wird. Formal ausgedrückt ist also

$$f_{BP}(P) = h\left(f_{RP}(P), VZ\right),$$

wobei

- $f_{BP}(P)$ die Kennlinie der Betriebspumpe,
- $f_{RP}(P)$ die Kennlinie der Referenzpumpe,
- P einen die elektromotorische Kraft des jeweiligen Pumpenmotors repräsentierenden Parameter, in Abhängigkeit von welchem die obigen Kennlinien formuliert sind, und
- h eine vorgegebene Kalibrierungsfunktion

bezeichnen. Die Kennlinie der Betriebspumpe ist demnach eine Funktion der Kennlinie der Referenzpumpe und der Verhältniszahl. Auf diese Weise lässt sich die einmal für die Referenzpumpe ermittelte Kennlinie in einer an die Gegebenheiten der Betriebspumpe angepassten Form nutzen. Die Kennlinie für die Referenzpumpe kann dabei einen beliebigen funktionalen Zusammenhang zwischen dem Parameter und einer das Verhalten der Bremsanlage beschreibenden Größe beinhalten. Auf diese Weise lassen sich für die Referenzpumpe während der Entwicklungsphase der Kraftfahrzeugbremsanlage gewonnene Erkenntnisse in vollem Umfang auch für die Betriebspumpe nutzen.

Die Kennlinie der Referenzpumpe steht jederzeit für die Verrechnung mit der zumindest einen Verhältniszahl zur Verfügung. Sie ist dabei insbesondere in einem Datenspeicher der als Mikrocontroller ausgebildeten Steuereinheit hinterlegt. Die Kalibrierung der Betriebspumpe lässt sich somit jederzeit von Neuem durchführen. In vorteilhafter Anwendung des Verfahrens ist insbesondere vorgesehen, eine erste Kalibrierung vor der Auslieferung des Kraftfahrzeuges durchzuführen. Damit lassen sich Fertigungstoleranzen bei der Herstellung der Betriebspumpe und der gesamten Kraftfahrzeugbremsanlage eliminieren, ohne dass die Kennlinie für jede Betriebspumpe einzeln von Grund auf bestimmt werden müsste. Bevorzugt werden in periodischen Abständen weitere Kalibrierungen durchgeführt, beispielsweise im Rahmen einer Wartung des Kraftfahrzeuges in einer Werkstatt. Auf diese Weise lassen sich auch Alterungs- und Verschleißprozesse der Betriebspumpe und der gesamten Kraftfahrzeugbremsanlage eliminieren.

In einer vorteilhaften Variante des Verfahrens stellen die Kennlinien einen funktionalen Zusammenhang zwischen dem zumindest einen Parameter und einem Bremsleitungsdruck der Kraftfahrzeugbremse dar. Auf diese Weise lässt sich der Bremsleitungsdruck ohne den Einsatz eines Druckmessumformers angepasst an den Betriebszustand der Betriebspumpe ermitteln. Durch die Anpassung der für die Referenzpumpe gemessenen Kennlinie an die Betriebspumpe ergibt sich eine Erhöhung der Genauigkeit bei der Bestimmung des Bremsleitungsdrucks. Der mittels der Kennlinie berechnete Bremsleitungsdruck ist insbesondere der Druck der sich ausgangsseitig an die Pumpe anschließenden Bremsleitung, also der so genannte Vordruck. Mit genauer Kenntnis dieses Vordrucks lässt sich der Schaltzeitpunkt der beiden Zweiwegeventile mittels der Steuereinheit exakt vorgeben. Auf diese Weise ist ein besonders kontrollierter Bremsvorgang erreichbar. Druckstöße, wie sie bei ungünstigen Schaltzeitpunkten der beiden Zweiwegeventile entstehen können und die die Beherrschbarkeit des Kraftfahrzeuges während des Bremsvorganges beeinträchtigen, sind somit sicher vermieden.

Alternativ oder zusätzlich kann die Kennlinie als Funktionswert auch eine Durchflussrate und/oder eine Betriebstemperatur der jeweiligen Pumpe in Abhängigkeit des mindestens einen Parameters wiedergeben.

In einer weiteren vorteilhaften Variante des Verfahrens wird die Verhältniszahl zur Diagnose der Betriebspumpe herangezogen, indem überprüft wird, ob die Verhältniszahl innerhalb oder außerhalb eines vorgegebenen Toleranzbereichs liegt. Liegt die Verhältniszahl oder die Kenngröße außerhalb des Toleranzbereiches, so bedeutet dies, dass die Betriebspumpe in ihrem Betriebsverhalten von der Referenzpumpe stark abweicht. Die Betriebspumpe wird in diesem Fall als fehlerhaft erkannt.

Die vorstehend beschriebene Überprüfung findet beispielsweise im Rahmen eines normalen Kalibriervorganges statt. Bei der Kalibrierung der Kraftfahrzeugbremsanlage unmittelbar vor der Inbetriebnahme eines Kraftfahrzeuges lassen sich somit Fehler der Betriebspumpe, beispielsweise Fertigungsfehler oder Einbaufehler, zuverlässig erkennen. Auch lassen sich etwaige starke Alterungs- oder Verschleißerscheinungen der Betriebspumpe nach einem längeren Betrieb des Kraftfahrzeuges detektieren, so dass die Betriebspumpe rechtzeitig instandgesetzt oder ausgetauscht werden kann. Die Überprüfung kann hierzu auch unabhängig von der Pumpenkalibrierung vorgenommen werden.

Die statistische Auswertung der für die Referenzpumpe bzw. für die Betriebspumpe ermittelten Parameter erfolgt bevorzugt durch Auftragung der erfassten Parameterwerte in jeweiligen Histogrammen für die Referenzpumpe bzw. für die Betriebspumpe, wobei die zur Berechnung der Verhältniszahl verwendeten statistischen Kenngrößen aus dem jeweiligen Histogramm ermittelt werden. Unter einem Histogramm wird nachfolgend eine Häufigkeitsverteilung von über einer vorgegebene Zahl von Betriebstakten auftretenden Messwerten des Parameters verstanden.

Als für die elektromotorische Kraft des Pumpenmotors repräsentativer Parameter wird bevorzugt die unmittelbar nach Beendigung eines Ansteuerungspulses der Pumpenspannung an den Motorklemmen anliegende Spannung herangezogen. Diese Spannung wird insbesondere durch den ersten erfassten Spannungswert (nachfolgend als $U^{off}$ bezeichnet) innerhalb einer auf den Puls folgenden Pulslücke repräsentiert. Zusätzlich oder alternativ wird in einer weiteren zweckmäßigen Ausführung des Verfahrens als Parameter die im zeitlichen Durchschnitt während der Pulslücke anliegende Spannung herangezogen. Diese Spannung wird messtechnisch insbesondere durch den Mittelwert (nachfolgend als $U^{AVER}$ bezeichnet) mehrerer während der Pulslücke erfassten Spannungswerte repräsentiert. Es hat sich gezeigt, dass diese beiden Parameter in hohem Maße spezifisch für jede individuellen Pumpe sind, und einen besonders präzisen Rückschluss auf das Betriebsverhalten dieser Pumpe ermöglichen.

Ferner werden optional - zusätzlich oder alternativ zu den obigen Größen - folgende Parameter der Pumpenspannung erhoben und bei der Ermittlung der statistischen Kenngrößen, insbesondere ggf. bei der Erstellung der Histogramme, berücksichtigt:

- letzter Spannungswert eines Pulses eines Betriebstaktes der jeweiligen Pumpe,

- erster Spannungswert des Pulses,

- Differenzwert zwischen dem letzten Spannungswert des Pulses und dem ersten Spannungswert der Pulslücke,

- niedrigster Spannungswert innerhalb der Pulslücke,

- Summe bzw. zeitliches Integral der Spannungswerte innerhalb der Pulslücke,

- Steigung des Spannungsabfalls innerhalb der Pulslücke,

- Differenz zwischen dem niedrigsten Spannungswert der Pulslücke und dem ersten Spannungswert des nachfolgenden Pulses,

- Zeit bis zum Abfall der Spannung auf Null.

Jeder dieser Werte lässt sich einfach erfassen, indem eine Messung der Motorspannung des Pumpenmotors durchgeführt wird und indem diese Messung mit dem bekannten Betriebstakt der Pumpe korreliert wird. Gegebenenfalls wird noch eine einfache algebraische Operation, wie eine Summen- oder Mittelwertbildung oder die Errechnung einer Ausgleichsgeraden, durchgeführt. So lässt sich eine Spannungsmessanordnung in einfacher Weise in Schaltungslogik einer als Mikrocontroller ausgeführten Steuereinheit integrieren.

Bevorzugt ist im Rahmen der Vorgaben die Taktung der jeweiligen Pumpe während der Messung fest vorgegeben. Damit ist das Verhältnis der Dauer eines Pulses zur Dauer einer nachfolgenden Pulslücke für die Referenzpumpe und für die Betriebspumpe immer gleich. Die Messwerte für die Referenzpumpe und für die Betriebspumpe kommen daher unter den gleichen Vorgaben für die Ansteuerung des Pumpenmotors zustande. Ausdrücklich sei auch darauf hingewiesen, dass hier auch Vorgaben, bei denen die Taktung während einer Messung in einer definierten Weise mehrmals hintereinander geändert wird, mit umfasst sein sollen. Mit einer derartigen Vorgabe lässt sich die Kennlinie der Betriebspumpe in einem weiteren Rahmen erfassen, als wenn nur mit einer einzigen Taktung gemessen werden würde.

In einer zweckmäßigen Weiterbildung wird der zumindest eine Parameter auf einen weiteren der oben genannten Parameter normiert. Formal ist

$$\|P(t_i)\| = \frac{P(t_i)}{P'(t_i)},$$

wobei

- $P(t_i)$ einen ersten Parameter der Motorspannung der

jeweiligen Pumpe,

- $P'(t_i)$ einen zweiten Parameter der Motorspannung der jeweiligen Pumpe,
- $\|P(t_i)\|$ den auf den zweiten Parameter normierten ersten Parameter, sowie
- $t_i$ den Zeitpunkt der Messung, $i$ =1,...,$n$, ($n$ Anzahl der einem Histogramm $H_{RP}$, $H_{BP}$ zugrunde liegenden Messungen) bezeichnen.

Durch die Normierung des Parameters lassen sich insbesondere Schwankungen des Absolutwertes der Motorspannung ausgleichen, die ansonsten die in der Pulslücke gemessenen Werte beeinflussen würden.

In zweckmäßiger Ausführung des Verfahrens wird als statistische Kenngröße jeweils der Mittelwert der für die Referenzpumpe bzw. für die Betriebspumpe erfassten Parameterwerte herangezogen.

Die Kenngröße, insbesondere also der Mittelwert, kann durch direkte statistische Auswertung der Parameterwerte gewonnen werden. In einer alternativen Ausbildung des Verfahrens, die eine besonders gute numerische Stabilität des Verfahrens insbesondere bei einer geringen Anzahl von Parameterwerten aufweist, wird an jedes Histogramm zunächst eine mathematische Verteilungsfunktion mittels eines numerischen Regressionsverfahrens (Fit) angepasst. Die statistischen Kenngrößen werden in diesem Fall aus der angepassten Verteilungsfunktion gewonnen. Als Verteilungsfunktion wird insbesondere eine Gaußsche Verteilungsfunktion herangezogen.

In einer zweckmäßigen Weiterbildung werden die Verhältniszahlen mehrerer Parameter zur Bildung einer Summen-Verhältniszahl miteinander verrechnet. Bei einer Messgröße, die von sämtlichen den Verhältniszahlen zugrunde liegenden Parametern abhängt, lässt sich so eine genauere Kalibrierung und damit eine besser an die Realität angepasste Kennlinie für die Betriebspumpe ermitteln. Formal lässt sich dies schreiben als

$$VZ^{\{\Sigma\}} = \tilde{g}\left(VZ_1, ..., VZ_N\right),$$

wobei

- $VZ^{\{\Sigma\}}$ die Summen-Verhältniszahl,
- $\tilde{g}$ eine Funktion und
- $VZ_1$, ..., $VZ_N$ die zur Berechnung herangezogenen $N$ Verhältniszahlen bezeichnen.

Vorteilhaft ist diese Summen-Verhältniszahl eine gewichtete Summe der Verhältniszahlen. Dies ist im einfachsten Fall der arithmetische Mittelwert sämtlicher Verhältniszahlen. Jedoch lässt sich mittels Wichtungsfaktoren auch der Einfluss einzelner Parameter auf die Kennlinie berücksichtigen. Allgemein ergibt sich die Summen-Verhältniszahl daher als Linearkombination der einzelnen Verhältniszahlen formal zu

$$VZ^{\{\Sigma\}} = \sum_{j=1}^{N} \alpha_j \cdot VZ_j,$$

wobei

- $VZ^{\{\Sigma\}}$ die Summen-Verhältniszahl,
- die $VZ_j$ die einzelnen Verhältniszahlen und
- die $\alpha_j$ deren Wichtungskoeffizienten bezeichnen.

Die obige Aufgabe wird weiterhin gelöst durch eine Vorrichtung zur Kalibrierung einer Kraftfahrzeugbremsanlage mit einer getaktet betriebenen Pumpe und mit einer zur Durchführung des vorstehend beschriebenen Verfahrens ausgebildeten Steuereinheit. Diese Steuereinheit ist insbesondere als Mikrocontroller ausgeführt und daher klein und kompakt. Auf die Vorrichtung sind hierbei die einzelnen Ausgestaltungen des Verfahrens mit ihren Vorzügen sinngemäß zu übertragen.

Nachfolgend wird ein Ausführungsbeispiel der Erfindung anhand einer Zeichnung näher erläutert. Darin zeigen die einzelnen Figuren:

Fig. 1    eine schematische Darstellung einer Kraftfahrzeug- bremsanlage,

Fig. 2    einen Ausschnitt einer an einem Motor einer Pumpe gemessenen Motorspannung in einem Zeit-Spannungs- Diagramm,

Fig. 3    ein Verfahrensschema für die Kalibrierung der Pum- pe,

Fig. 4    ein Histogramm der Anfangsspannung einer Referenz- pumpe,

Fig. 5    ein weiteres Histogramm der Anfangsspannung einer Betriebspumpe, und

Fig. 6    je eine Kennlinie für die Referenzpumpe und für die Betriebspumpe, die den Vordruck der jeweiligen Pumpe in Abhängigkeit der jeweiligen Anfangsspan- nung beschreibt:

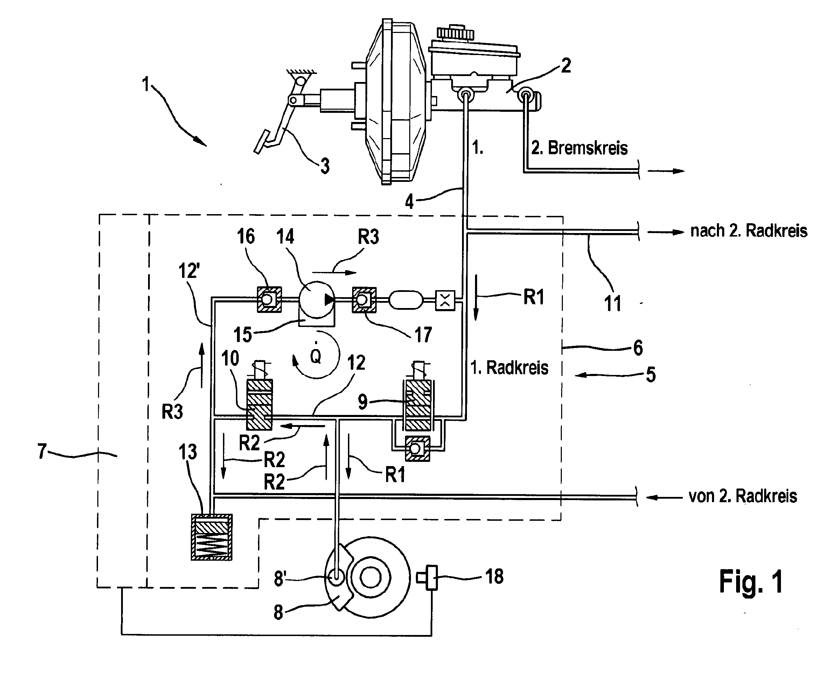

Fig. 1 zeigt eine schlupfgeregelte Kraftfahrzeugbremsanlage 1 eines Kraftfahrzeugs. Jedem Rad des Kraftfahrzeugs ist ein Radbremskreis zugeordnet. Je zwei Radbremskreise sind zu einem Bremskreis zusammengefasst. Da der Aufbau aller insgesamt vier Radbremskreise äquivalent ist, ist in der Fig. 1 der besseren Übersicht halber nur ein Radbremskreis gezeigt.

Die Kraftfahrzeugbremsanlage 1 weist einen Hauptbremszylinder 2 auf, der mittels eines Bremspedals 3 auslösbar ist und beide Bremskreise gleichzeitig mit der durch einen Bremskraftverstärker verstärkten Bremskraft des Bremspedals 3 beaufschlagt. Der Hauptbremszylinder 2 ist mittels einer Bremsleitung 4 und einer Regelvorrichtung 5, die eine Hydraulikeinheit 6 und eine Steuereinheit 7 umfasst, mit einem Radbremszylinder 8' einer Radbremse 8 eines Rades verbunden. Die Hydraulikeinheit 6 umfasst zwei Zweiwegeventile 9, 10, eine Rücklaufleitung 12, einen Niederdruckspeicher 13, eine zweite Rücklaufleitung 12' und eine von einem Motor 15 getriebene Pumpe 14. Die Pumpe 14 ist als Radialkolbenpumpe ausgebildet und weist saugseitig ein Saugventil 16 und druckseitig ein Druckventil 17 auf. Die Ansteuerung der beiden Zweiwegeventile 9, 10 und der Pumpe 14 erfolgt über die Steuereinheit 7, die als Mikrocontroller ausgebildet ist. Zudem ist der Steuereinheit 7 ein Drehzahlsensor 18 zugeordnet, mittels dem die momentane Umdrehungsgeschwindigkeit des Rades erfassbar ist.

Im normalen Fahrbetrieb des Kraftfahrzeuges ist das erste Zweiwegeventil 9 stromlos offen und das zweite Zweiwegeventil 10 stromlos geschlossen. Bei einer Betätigung des Bremspedals 3 wird die Bremsflüssigkeit in Richtung R1 zum Radbremszylinder 8' hin verschoben. Somit wird die Bremskraft unmittelbar auf den Radbremszylinder 8' übertragen. Das Rad des Kraftfahrzeuges wird abgebremst. Mittels der Steuereinheit 7 wird zudem ständig die Umdrehungsgeschwindigkeit sämtlicher vier Räder sowie des Kraftfahrzeuges umfasst. Sinkt die Umdrehungsgeschwindigkeit eines Rades gegenüber den anderen Rädern rapide ab, so liegt Schlupf vor. Das Rad droht zu blockieren. In diesem Fall erfolgt mittels der Steuereinheit 7 ein zeitgleiches oder nahezu zeitgleiches und aufeinander abgestimmtes Umschalten der beiden Zweiwegeventile 9, 10. Das Zweiwegeventil 9 ist nunmehr geschlossen, so dass die Bremskraft 9 nicht mehr auf den Radbremszylinder wirken kann. Über den Rücklaufanschluss 12 wird Bremsflüssigkeit über das nunmehr offene Zweiwegeventil 10 zum Niederdruckspeicher 13 hin in Richtung R2 abgeführt. Auf diese Weise wird der Radbremszylinder 8 entlastet. Das Rad wird von der Radbremse wieder frei gegeben, so dass sich seine Umdrehungsgeschwindigkeit wieder an die Geschwindigkeit des Kraftfahrzeuges angleicht. Mittels der Pumpe 14 wird die Bremsflüssigkeit von ihrer Saugseite mit ihrem Saugventil 16 her in Richtung R3 zu ihrer Druckseite mit ihrem Druckventil 17 hin in Richtung der Bremsleitung 4 zurück gefördert.

Anschließend werden beide Zweiwegeventile 9, 10 wieder aufeinander abgestimmt umgeschaltet, so dass wiederum die Ausgangskonstellation mit offenem Zweiwegeventil 9 und mit geschlossenem Zweiwegeventil 10 vorliegt. Nunmehr wirkt die auf das Bremspedal 3 ausgeübte Bremskraft wieder auf den Radbremszylinder 10. Das Fahrzeug wird weiter abgebremst, bis es wiederum zu einer mit einem Schlupf verbundenen signifikanten Abbremsen des Rades kommt und die beiden Zweiwegeventile 9, 10 erneut umschalten. Diese drei Vorgänge - Bremsen, bei Bedarf entlasten und bei Bedarf Rückführen der Bremsflüssigkeit - finden dabei in sehr schneller Folge in Sekundenbruchteilen statt, bis das Kraftfahrzeug abgebremst oder wieder beherrschbar ist. Auf diese Weise ist auch unter kritischen Bedingungen, also beispielsweise bei Ausübung einer hohen Bremskraft bei regennasser oder schneeglatter Fahrbahn, ein sicheres Abbremsen erreicht.

Mittels des Rückförderns von Bremsflüssigkeit durch die Pumpe 14 ist gewährleistet, dass es nicht zu einem starken Abfall des Leitungsdruckes in der Bremsleitung 4 kommt, was eine Verringerung der auf den Bremszylinder ausübbaren Bremskraft zur Folge hätte.

Der elektrische Motor 15 der Pumpe 14 basiert grundsätzlich auf einer fremderregten Gleichstrommaschine zum Antrieb des Pumpenläufers, deren Geschwindigkeit über eine Pulsweitenmodulation (PWM) einer konstanten Versorgungsspannung angesteuert wird. Dabei ist die Drehzahl des Pumpenläufers in mehreren Stufen einstellbar. Über die Drehzahl des Pumpenläufers wiederum ist die Fördermenge der Pumpe 14 vorgegeben. Zur Steuerung der Drehzahl wird innerhalb eines festen Zeitintervalls (ein PWM-Zyklus bzw. Betriebstakt, beispielsweise mit einer Zeitdauer von 60 ms) die Dauer des Pulses und somit die Resttaktdauer der auf den Puls folgenden Pulslücke der am Motor anliegenden Versorgungsspannung moduliert. Eine Vollaussteuerung des Motors entspricht einer über das gesamte Zeitintervall des Betriebstaktes anliegenden Versorgungsspannung. Bei geringerer Aussteuerung wird die Versorgungsspannung des Motors 15 nach einer gewissen Zeit abgeschaltet (beispielsweise nach 40 ms), bleibt für die restliche Dauer des Betriebstaktes ausgeschaltet (im Beispiel 20 ms) und wird zu Beginn des nächsten Betriebstaktes wieder eingeschaltet. Mit abnehmender Aussteuerung oder Geschwindigkeitsstufe nimmt die Dauer der Pulslücke gegenüber der Dauer des Pulses bei vorgegebener Dauer des Betriebstaktes zu. So lässt sich mittels der Steuereinheit die Drehzahl des Pumpenläufers und damit die Fördermenge der Pumpe 14 in einem weiten auf den jeweiligen Förderbedarf abgestimmten Rahmen regeln.

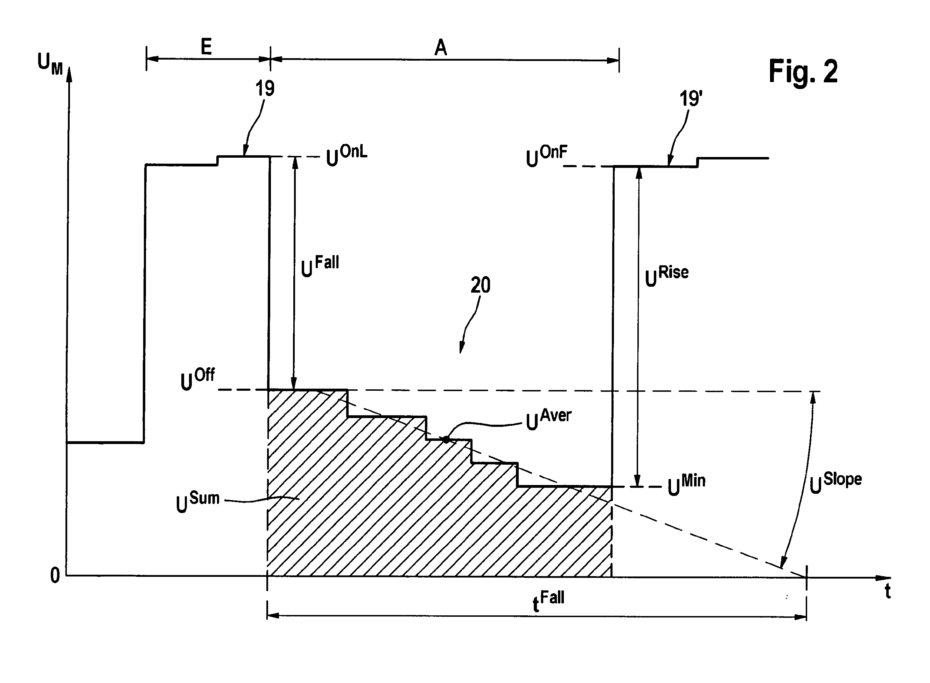

Fig. 2 zeigt die am Motor 15 abfallende Motorspannung $U_M$ in einem Zeit-Spannungs-Diagramm. Der Betriebstakt der in der Fig. 2 nicht dargestellten Versorgungsspannung ist in der Motorspannung $U_M$ im Wesentlichen nachgebildet: auf einen Puls 19 der Pulsweite E folgt eine Pulslücke 20 der Resttaktdauer A. Der Puls 19 und die Pulslücke 20 ergeben zusammen einen Betriebstakt. Auf die Pulslücke 20 folgt ein Puls 19' eines folgenden Betriebstaktes. Während des Pulses 19 entspricht die Motorspannung $U_M$ im Wesentlichen der Versorgungsspannung. Jedoch sinkt die Motorspannung $U_M$ während der Pulslücke 20 nicht auf Null ab. Dies ist darin begründet, dass der Motor 15 unmittelbar nach dem Ausschalten nachläuft und eine Spannung induziert. Der Motor 15 wirkt demnach gleichsam als Generator. Während der Pulslücke 20 sinkt die Motorspannung $U_M$ immer weiter ab. In der Fig. 2 sind weiterhin mehrere Parameter $P$ eingezeichnet, die sich sämtlich auf den Verlauf der Motorspannung $U_M$ während der Pulslücke beziehen. Es sind dies im Einzelnen:

- der letzte Spannungswert $U^{\text{OnL}}$ des Pulses 19,
- der erste Spannungswert $U^{\text{OnF}}$ des auf die Pulslücke 20 nachfolgenden Pulses 19',
- der erste Spannungswert $U^{\text{Off}}$ der Pulslücke 20 (nachfolgend: Anfangsspannung $U^{\text{Off}}$),
- der Differenzwert $U^{\text{Fall}}$ zwischen dem letzten Spannungswert $U^{\text{OnL}}$ des Pulses 19 und dem ersten Spannungswert $U^{\text{Off}}$ der Pulslücke 20,
- der niedrigste Spannungswert $U^{\text{Min}}$ innerhalb der Pulslücke 20,
- die Summe $U^{\text{Sum}}$ der Spannungswerte innerhalb der Pulslücke 20, wobei $U^{\text{Sum}} = \sum_{i=1}^{n} U_i$ gilt und sämtliche Spannungswerte $U_i$ während der Pulslücke 20 miteinander addiert werden,
- der mittlere Spannungswert $U^{\text{Aver}}$ der Spannungswerte innerhalb der Pulslücke 20 (nachfolgend: Durchschnittsspannung $U^{\text{Aver}}$), wobei

$$U^{\text{Aver}} = \frac{1}{n} \cdot U^{\text{Sum}} = \frac{1}{n} \cdot \sum_{i=1}^{n} U_i \text{ gilt,}$$

- die Steigung $U^{\text{Slope}}$ des Spannungsabfalls innerhalb der Pulslücke 20,
- die Differenz $U^{\text{Rise}}$ zwischen dem niedrigsten Spannungswert $U^{\text{Min}}$ der Pulslücke 20 und dem ersten Spannungswert $U^{\text{OnF}}$ des nachfolgenden Pulses 19',
- die Zeit $t^{\text{Fall}}$ bis zum Abfall der Spannung auf Null (da aufgrund des nachfolgenden Pulses dieses Abfallen auf Null nicht erfolgt, wurde dieser Wert in der Fig. 2 extrapoliert).

Zunächst wird eine Kennlinie $p_V = p_V\!\left(U_{\text{RP}}^{\text{Off}}\right)$ für eine Referenzpumpe ermittelt, die von der Anfangsspannung $U_{\text{RP}}^{\text{Off}}$ als Parameter abhängt. Die Kennlinie $p_V\!\left(U_{\text{RP}}^{\text{Off}}\right)$ wird in einem Datenspeicher der Steuereinheit 7 hinterlegt. Damit lässt sich im späteren Betrieb der Kraftfahrzeugbremsanlage 1 eines Endkunden, in die nunmehr eine Betriebspumpe verbaut ist, aus dem gemessenen Momentanwert der an der Betriebspumpe gemessenen Anfangsspannung $U_{\text{BP}}^{\text{Off}}$ der Momentanwert des Vordrucks $p_V$ errechnen. Abhängig von diesem errechneten Vordruck $p_V$ werden die beiden Zweiwegeventile 9, 10 von der Steuereinheit 7 angesteuert. Eine aufwändige Messung des Vordruckes $p_V$ mittels eines Druckmessumformers ist somit nicht notwendig.

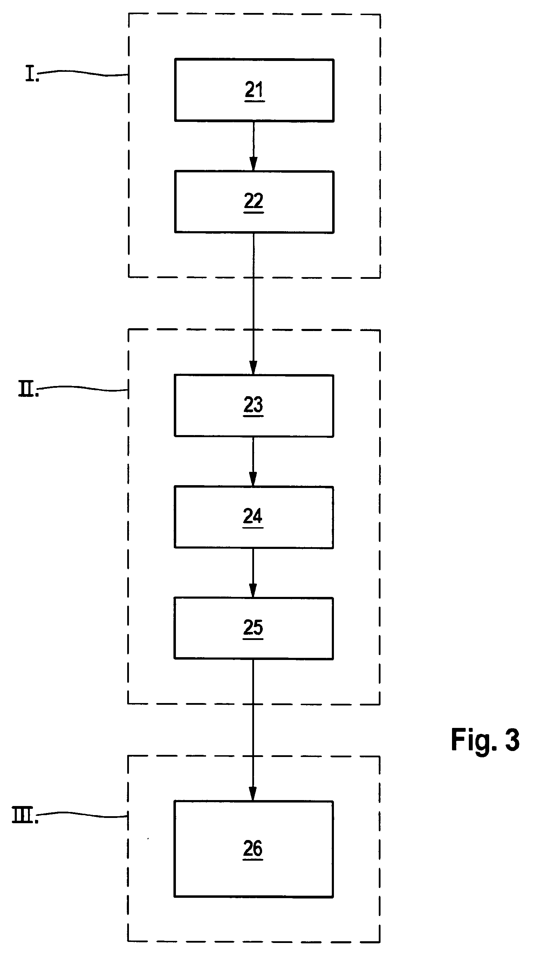

Wie bereits angeführt, sind Fertigungstoleranzen und Alterungsprozesse der Betriebspumpe bei dieser Vorgehensweise nicht mit erfasst. Fig. 3 zeigt ein Verfahrensschema, bei dem zusätzlich eine Kalibrierung der Betriebspumpe auf die Referenzpumpe erfolgt.

Während einer Erprobungsphase I. wird in einem Verfahrensschritt 21 insbesondere an einem Laboraufbau der Bremsanlage die Kennlinie $p_V\!\left(U_{\text{RP}}^{\text{Off}}\right)$ zwischen der Anfangsspannung $U_{\text{RP}}^{\text{Off}}$ und dem Vordruck $p_V$ für die Referenzpumpe ermittelt. In einem Verfahrensschritt 22 wird ebenfalls während der Erprobungsphase I. für die Referenzpumpe ein Histogramm $H\!\left(U_{\text{RP}}^{\text{off}}\right)$ für die Anfangsspannung $U_{\text{RP}}^{\text{off}}$ ermittelt. Die Kennlinie $p_V\!\left(U_{\text{RP}}^{\text{off}}\right)$ und das Histogramm $H\!\left(U_{\text{RP}}^{\text{Off}}\right)$ werden im Datenspeicher der Steuereinheit 7 hinterlegt.

Während einer auf die Erprobungsphase I. folgenden Kalibrierungsphase II. erfolgt die Kalibrierung einer speziellen Betriebspumpe. Die Betriebspumpe ist hierbei insbesondere im Rahmen einer zugehörigen Bremsanlage bereits in einem Fahrzeug eingebaut. In der Kalibrierungsphase II wird in einem Verfahrensschritt 23 je ein Histogramm $H\!\left(U_{\text{BP}}^{\text{Off}}\right)$ für die Anfangsspannung $U_{\text{BP}}^{\text{off}}$ ermittelt. Die Vorgaben für die Kalibrierung entsprechen nach Möglichkeit im wesentlichen denjenigen Vorgaben, unter denen das Histogramm $H\!\left(U_{\text{RP}}^{\text{Off}}\right)$ für die Referenzpumpe ermittelt wurde.

In einem Verfahrensschritt 24 werden aus den beiden für die Anfangsspannung $U^{\text{Off}}$ ermittelten Histogramme $H\!\left(U_{\text{RP}}^{\text{Off}}\right)$, $H\!\left(U_{\text{BP}}^{\text{Off}}\right)$ die Mittelwerte $\left\langle U_{\text{RP}}^{\text{off}}\right\rangle$, $\left\langle U_{\text{BP}}^{\text{off}}\right\rangle$ der Parameter $U_{\text{RP}}^{\text{off}}$ bzw. $U_{\text{BP}}^{\text{off}}$ als statistische Kenngrößen berechnet. Aus diesen Mittelwerten wird eine Verhältniszahl VZ durch Quotientenbildung

$$VZ = \frac{\left\langle U_{\text{BP}}^{\text{Off}}\right\rangle}{\left\langle U_{\text{RP}}^{\text{Off}}\right\rangle}$$

errechnet.

In Abhängigkeit von dieser Verhältniszahl VZ wird in einem Verfahrensschritt 25 eine Kennlinie $p_V\!\left(U_{\text{BP}}^{\text{off}}\right)$ der Betriebspumpe an die für die Referenz-

pumpe in der Erprobungsphase I. gemessene Kennlinie $p_{\mathrm{V}}\left(U_{\mathrm{RP}}^{\mathrm{off}}\right)$ angepasst. Die Kennlinie $p_{\mathrm{V}}\left(U_{\mathrm{BP}}^{\mathrm{off}}\right)$ ist als hierbei Funktion der Kennlinie $p_{\mathrm{V}}\left(U_{\mathrm{RP}}^{\mathrm{off}}\right)$ der Referenzpumpe sowie der Verhältniszahl VZ im Datenspeicher der Steuereinheit 7 hinterlegt:

$$p_{\mathrm{V}}\left(U_{\mathrm{BP}}^{\mathrm{off}}\right)=f\left(p_{\mathrm{V}}\left(U_{\mathrm{RP}}^{\mathrm{off}}\right),VZ\right).$$

Sowohl bei der Referenzpumpe als auch bei der Betriebspumpe erfolgt die Datenerfassung für die Histogramme $H\left(U_{\mathrm{RP}}^{\mathrm{Off}}\right)$ und $H\left(U_{\mathrm{BP}}^{\mathrm{Off}}\right)$ stets im lastfreien Zustand der Kraftfahrzeugbremsanlage 1, d.h. bei unbetätigtem Bremspedal 3.

Während der Betriebsphase III. der Kraftfahrzeugbremsanlage 1 wird nun im Betrieb des Fahrzeugs ständig in einem Verfahrensschritt 26 aus der in der Steuereinheit 7 gespeicherten Kennlinie $p_{\mathrm{V}}\left(U_{\mathrm{BP}}^{\mathrm{off}}\right)$ anhand der Messwerte der an der Betriebspumpe gemessenen Anfangsspannung $U_{\mathrm{BP}}^{\mathrm{off}}$ der Vordruck $p_{\mathrm{V}}$ der Bremsleitung 4 errechnet. Anhand dieses ermittelten Vordruckes $P_{\mathrm{V}}$ erfolgt eine angepasste Ansteuerung der beiden Zweiwegeventile 9, 10.

Die Kalibrierphase II. wird bei Bedarf periodisch wiederholt. Weiterhin wird bei der Durchführung der Kalibrierung entweder automatisch durch die Steuereinheit 7 oder manuell durch einen Servicetechniker überprüft, ob die Verhältniszahl *VZ*innerhalb oder außerhalb eines vorgegebenen Toleranzbereichs liegt. Wird bei dieser Überprüfung festgestellt, dass die Verhältniszahl *VZ* außerhalb des Toleranzbereichs liegt, so wird die Betriebspumpe als fehlerhaft erkannt. Bei automatischer Überprüfung gibt die Steuereinheit 7 in diesem Fall ein Warnsignal aus.

Die der Kalibrierphase II. und der Betriebsphase III. entsprechenden Verfahrensabschnitte werden durch die als Mikrocontroller ausgebildete Steuereinheit 7 durchgeführt. Die Kalibrierungsphase II. kann alternativ hierzu aber auch von einer externen Steuereinheit, etwa von einem Werkstatt-Messrechner aus, durchgeführt werden. In diesem Fall wird nach Abschluss der Kalibrierung die resultierende (neue) Kennlinie $p_{\mathrm{V}}\left(U_{\mathrm{BP}}^{\mathrm{off}}\right)$ für die Betriebspumpe an die Steuereinheit 7 übertragen und in deren Datenspeicher gespeichert. Die Übertragung der Kennlinie $p_{\mathrm{V}}\left(U_{\mathrm{BP}}^{\mathrm{off}}\right)$ geschieht beispielsweise über ein Datenkabel, über das die Steuereinheit mit der externen Steuereinheit verbunden ist.

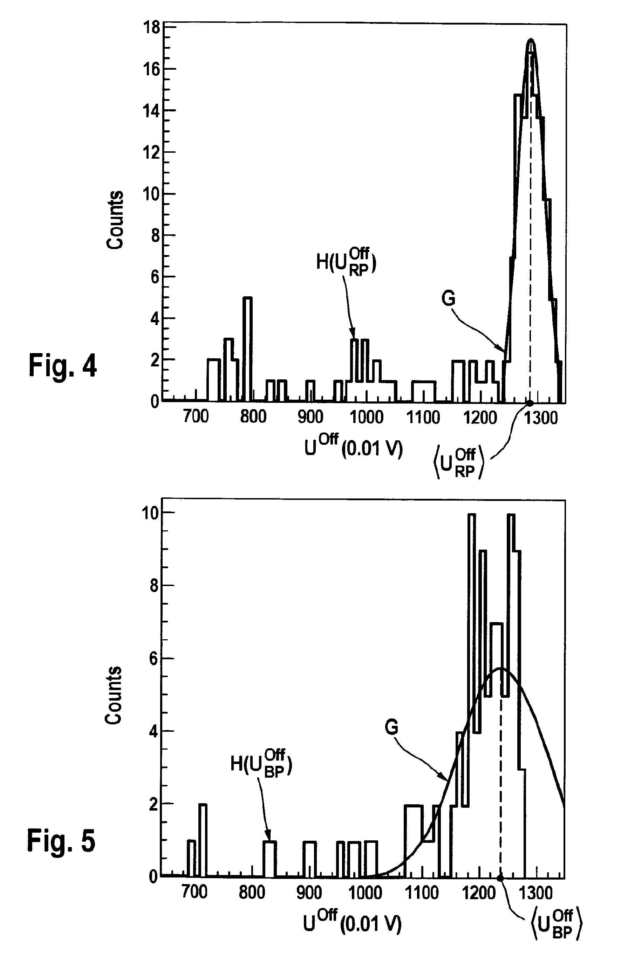

Fig. 4 zeigt das Histogramm $H\left(U_{\mathrm{RP}}^{\mathrm{off}}\right)$ für die Anfangsspannung $U_{\mathrm{RP}}^{\mathrm{off}}$ der der Referenzpumpe. Zur Ermittlung des Histogramms $H\left(U_{\mathrm{RP}}^{\mathrm{Off}}\right)$ wird der Motor 15 der Referenzpumpe über einen vorgegebenen Testzeitraum mit einem vorgegebenen Betriebstakt beaufschlagt. Je Betriebstakt wird ein Spannungswert $U_{\mathrm{RP}}^{\mathrm{Off}}\left(t_i\right)$ für die Anfangsspannung $U_{\mathrm{RP}}^{\mathrm{off}}$ zu einem Zeitpunkt $t_i$, $i=1,\ldots,n$ erfasst. Jeder Messwert $U_{\mathrm{RP}}^{\mathrm{off}}\left(t_i\right)$ wird auf den letzten Spannungswert $U_{\mathrm{RP}}^{\mathrm{OnL}}\left(t_i\right)$ des vorangehenden Pulses 19 normiert, in Formelschreibweise:

$$\left\|U_{\mathrm{RP}}^{\mathrm{Off}}\left(t_i\right)\right\|=\frac{U_{\mathrm{RP}}^{\mathrm{Off}}\left(t_i\right)}{U_{\mathrm{RP}}^{\mathrm{OnL}}\left(t_i\right)}.$$

Durch diese Normierung werden Schwankungen des Absolutwertes der Motorspannung $U_M$ ausgeglichen, die ansonsten die Messung beeinflussen würden.

Nach Abschluss des Testzeitraumes werden die Spannungswerte $U_{\mathrm{RP}}^{\mathrm{Off}}\left(t_i\right)$ ihrem Wert entsprechend Spannungsintervallen zugeordnet, die das gesamte Spektrum der gemessenen Spannungswerte $U_{\mathrm{RP}}^{\mathrm{Off}}\left(t_i\right)$ abdecken. Zur Ermittlung des Histogramms $H\left(U_{\mathrm{RP}}^{\mathrm{Off}}\right)$ wird gezählt, wie viele Spannungswerte $U_{\mathrm{RP}}^{\mathrm{Off}}\left(t_i\right)$ in jedem der Spannungsintervalle liegen. Diese Anzahlwerte ergeben in Auftragung gegen die Anfangsspannung $U_{\mathrm{RP}}^{\mathrm{Off}}$ das Histogramm $H\left(U_{\mathrm{RP}}^{\mathrm{Off}}\right)$ gemäß Fig. 4.

An das Histogramm $H\left(U_{\mathrm{RP}}^{\mathrm{Off}}\right)$ ist eine mathematische Verteilungsfunktion G angepasst, die die Gestalt einer Gaußschen Verteilungsfunktion aufweist. Aus der angepassten Verteilungsfunktion G wird der Mittelwert $\left\langle U_{\mathrm{RP}}^{\mathrm{off}}\right\rangle$ bestimmt, der im Falle der Gaußschen Verteilungsfunktion dem Maximum derselben entspricht. Dieser Mittelwert ist in dem Datenspeicher der Steuereinheit 7 hinterlegt.

Fig. 5 zeigt das in entsprechender Weise für die Betriebspumpe erstellte Histogramm $H\left(U_{\mathrm{BP}}^{\mathrm{Off}}\right)$ mit

der an dieses angepassten Gaußschen Verteilungsfunktion G. Die Steuereinheit 7 ermittelt wiederum den Mittelwert $\langle U_{\mathrm{BP}}^{\mathrm{off}} \rangle$ aus der Verteilungsfunktion G.

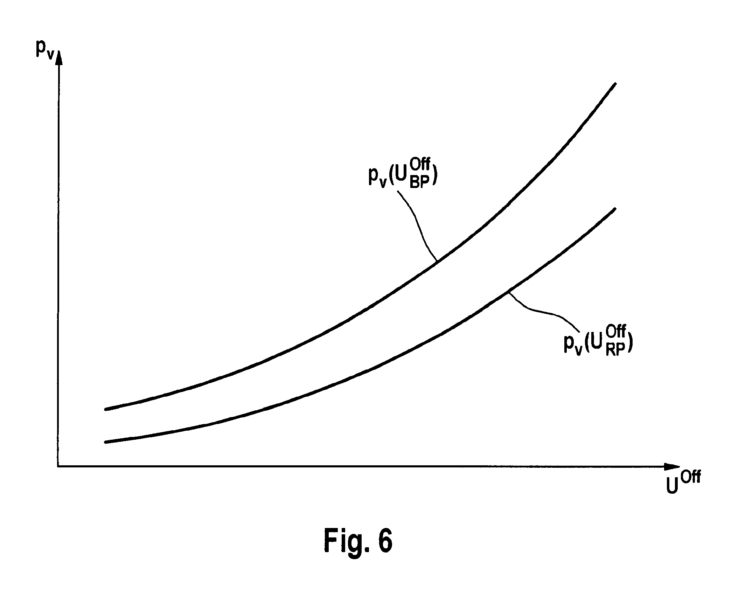

In Fig. 6 ist die Kennlinie $p_{\mathrm{V}} = p_{\mathrm{V}}\left(U_{\mathrm{RP}}^{\mathrm{Off}}\right)$ als Funktion der Anfangsspannung $U^{\mathrm{Off}}$ aufgetragen, die gemäß Verfahrensschritt 21 in der Erprobungsphase I. für die Referenzpumpe ermittelt wurde. Die Kennlinie $p_{\mathrm{V}}\left(U_{\mathrm{BP}}^{\mathrm{Off}}\right)$ für die Betriebspumpe geht aus der Kennlinie $p_{\mathrm{V}}\left(U_{\mathrm{RP}}^{\mathrm{Off}}\right)$ für die Referenzpumpe durch eine einfache Multiplikation mit der Verhältniszahl *VZ* hervor. Formal ist

$$p_{\mathrm{V}} = p_{\mathrm{V}}\left(U_{\mathrm{BP}}^{\mathrm{Off}}\right) = VZ \cdot p_{\mathrm{V}}\left(U_{\mathrm{RP}}^{\mathrm{Off}}\right).$$

Die ermittelte Kennlinie $p_{\mathrm{V}}\left(U_{\mathrm{BP}}^{\mathrm{Off}}\right)$ wird nun, wie bereits beschrieben, im Datenspeicher der Steuereinheit 7 gespeichert.

**Bezugszeichenliste**

| | |
|---|---|
| 1 | Kraftfahrzeugbremsanlage |
| 2 | Hauptbremszylinder |
| 4 | hydraulische Verbindung |
| 5 | Verteilvorrichtung |
| 6 | Hydraulikeinheit |
| 7 | Steuereinheit |
| 8 | Radbremse |
| 9, 10 | Auslassventil |
| 11 | Abzweig |
| 12 | Rücklaufanschluss |
| 13 | Niederdruckspeicher |
| 14 | Pumpe oder RP,BP |
| 15 | Motor |
| 16 | Saugventil |
| 17 | Druckventil |
| 18 | Drehzahlsensor |
| 19 | Puls |
| 20 | Pulslücke |
| 21-26 | Verfahrensschritt |
| I. | Erprobungsphase |
| II. | Kalibrierungsphase |
| III. | Betriebsphase |
| A | Resttaktdauer |
| E | Pulsweite |
| G | Gaußsche Verteilungsfunktion |
| | Histogramm |
| | Mittelwert |
| | Mittelwert |
| $U^{\mathrm{OnF}}$ | Parameter |
| $U^{\mathrm{Off}}$ | Parameter |
| $U^{\mathrm{Fall}}$ | Parameter |
| $U^{\mathrm{min}}$ | Parameter |
| $U^{\mathrm{sum}}$ | Parameter |
| $U^{\mathrm{Aver}}$ | Parameter |
| $U^{\mathrm{slope}}$ | Parameter |
| $U^{\mathrm{rise}}$ | Parameter |
| $t^{\mathrm{Fall}}$ | Parameter |
| $p_{\mathrm{V}}$ | Vordruck |
| | Kennlinie |
| | Kennlinie |
| R1, R2, R3 | Richtung |

**Patentansprüche**

1.  Verfahren zur Kalibrierung oder Diagnose einer Kraftfahrzeugbremsanlage (1) mit einer getaktet betriebenen Pumpe (14),

    • wobei im Betrieb einer Referenzpumpe unter definierten Vorgaben zumindest ein Parameter $(U_{\mathbf{RP}}^{\mathbf{Off}})$, der die elektromotorische Kraft der Referenzpumpe repräsentiert, wiederholt ermittelt wird, wobei als Referenzpumpe eine Pumpe herangezogen wird, mit der in der Entwicklungsphase der Bremsanlage im Rahmen eines Prototyps des Fahrzeugbremssystems Referenzmessungen durchgeführt werden,
    • wobei aus den für die Referenzpumpe ermittelten Werten des Parameters $(U_{\mathbf{RP}}^{\mathbf{Off}})$ eine statistische Kenngröße $(\langle U_{\mathbf{RP}}^{\mathbf{Off}} \rangle)$ abgeleitet wird,
    • wobei im Betrieb einer Betriebspumpe derselbe Parameter $(U_{\mathbf{BP}}^{\mathbf{Off}})$ unter entsprechenden Vorgaben ermittelt wird,
    • wobei aus den für die Betriebspumpe ermittelten Werten des Parameters $(U_{\mathbf{BP}}^{\mathbf{Off}})$ eine entsprechende statistische Kenngröße $(\langle U_{\mathbf{BP}}^{\mathbf{Off}} \rangle)$ abgeleitet wird,
    • wobei als Maß für die Abweichung des Betriebsverhaltens der Betriebspumpe von dem Betriebsverhalten der Referenzpumpe aus der für die Referenzpumpe berechneten Kenngröße $(\langle U_{\mathbf{RP}}^{\mathbf{Off}} \rangle)$ und der für die Betriebspumpe

berechneten Kenngröße ($\left\langle U_{BP}^{Off} \right\rangle$) zumindest eine Verhältniszahl errechnet wird und wobei

• anhand dieser Verhältniszahl eine Kennlinie ($p_v\left(U_{BP}^{Off}\right)$) der Betriebspumpe an eine für die Referenzpumpe entsprechend vorgegebene Kennlinie ($p_v\left(U_{RP}^{Off}\right)$) angepasst wird.

2. Verfahren nach Anspruch 1,
   **dadurch gekennzeichnet, dass**
   die Kennlinien ($p_v\left(U_{RP}^{Off}\right)$, $p_v\left(U_{BP}^{Off}\right)$) einen funktionalen Zusammenhang zwischen dem zumindest einen Parameter ($U^{Off}$) und einem Bremsleitungsdruck ($p_v$) der Kraftfahrzeugbremsanlage (1), einer Pumprate der Pumpe (14) und/oder einer Temperatur der Pumpe (14) darstellen.

3. Verfahren nach einem der Ansprüche 1 oder 2,
   **dadurch gekennzeichnet, dass**
   überprüft wird, ob die Verhältniszahl außerhalb eines vorgegebenen Toleranzbereichs liegt, wobei in diesem Fall die Betriebspumpe als fehlerhaft erkannt wird.

4. Verfahren nach einem der Ansprüche 1 bis 3,
   **dadurch gekennzeichnet, dass**
   die statistischen Kenngrößen ($\left\langle U_{RP}^{Off} \right\rangle$, $\left\langle U_{BP}^{Off} \right\rangle$) aus einem für die Referenzpumpe bzw. für die Betriebspumpe erstellten Histogramm ($H\left(U_{RP}^{Off}\right)$, $H\left(U_{BP}^{Off}\right)$) des Parameters ($U^{off}$) ermittelt werden.

5. Verfahren nach Anspruch 4,
   **dadurch gekennzeichnet, dass**
   die statistische Kenngrößen ($\left\langle U_{RP}^{Off} \right\rangle$, $\left\langle U_{BP}^{Off} \right\rangle$) aus einem oder mehreren der folgenden Parameter ermittelt werden:

   • letzter Spannungswert ($U^{OnL}$) eines Pulses (19) eines Betriebstaktes (19, 20) der jeweiligen Pumpe,
   • erster Spannungswert ($U^{OnF}$) des Pulses (19'),
   • erster Spannungswert ($U^{Off}$) einer auf den Puls (19) folgenden Pulslücke (20),
   • Differenzwert ($U^{Fall}$) zwischen dem letzten Spannungswert ($U^{OnL}$) des Pulses (19) und dem ersten Spannungswert ($U^{Off}$) der Pulslücke (20),
   • niedrigster Spannungswert ($U^{Min}$) innerhalb der Pulslücke (20),
   • Summe ($U^{Sum}$) der Spannungswerte innerhalb der Pulslücke (20),
   • mittlerer Spannungswert ($U^{Aver}$) der Spannungswerte innerhalb der Pulslücke (20),
   • Steigung ($U^{Slope}$) des Spannungsabfalls innerhalb der Pulslücke (20),
   • Differenz ($U^{Rise}$) zwischen dem niedrigsten Spannungswert ($U^{Min}$) der Pulslücke (20) und dem ersten Spannungswert ($U^{OnF}$) des nachfolgenden Pulses (19'),
   • Zeit ($t^{Fall}$) bis zum Abfall der Spannung auf Null.

6. Verfahren nach einem der Ansprüche 1 bis 5,
   **dadurch gekennzeichnet, dass**
   im Rahmen der Vorgaben ein Betriebstakt der jeweiligen Pumpe (14) während der Messung fest vorgegeben ist.

7. Verfahren nach einem der Ansprüche 1 bis 6,
   **dadurch gekennzeichnet, dass**
   der zumindest eine Parameter ($U^{Off}$) auf einen weiteren Parameter normiert wird.

8. Verfahren nach einem der Ansprüche 1 bis 7,
   **dadurch gekennzeichnet, dass**
   als statistische Kenngröße der Mittelwert ($\left\langle U_{RP}^{Off} \right\rangle$, $\left\langle U_{BP}^{Off} \right\rangle$) der für die Referenzpumpe bzw. für die Betriebspumpe erfassten Werte des Parameters ($U^{off}$) herangezogen wird.

9. Verfahren nach einem der Ansprüche 4 bis 8,
   **dadurch gekennzeichnet, dass**
   an jedes Histogramm ($H\left(U_{RP}^{off}\right)$, $H\left(U_{BP}^{Off}\right)$) eine mathematische Verteilungsfunktion ($G$) angepasst wird.

10. Verfahren nach Anspruch 9,
    **dadurch gekennzeichnet, dass**
    die mathematische Verteilungsfunktion eine Gaußsche Verteilungsfunktion ($G$) ist.

11. Verfahren nach einem der Ansprüche 1 bis 10,
    **dadurch gekennzeichnet, dass**
    mehrere Verhältniszahlen zur Bildung einer Summen-Verhältniszahl verrechnet werden.

12. Verfahren nach Anspruch 11,
    **dadurch gekennzeichnet, dass**
    die Summen-Verhältniszahl eine gewichtete Summe der Verhältniszahlen ist.

13. Vorrichtung zur Kalibrierung einer Kraftfahrzeug-

bremsanlage (1) mit einer getaktet betriebenen Pumpe (14) mit einer zur Durchführung des Verfahrens nach einem der vorhergehenden Ansprüche 1 bis 12 ausgebildeten Steuereinheit (7).

## Claims

1. Method for the calibration or diagnosis of a motor vehicle brake system (1) having a pump (14) operating in a pulsed fashion,

   • in which during operation of a reference pump under defined stipulations, at least one parameter ($U_{\mathrm{RP}}^{\mathrm{Off}}$), which represents the electromotive force of the reference pump, is repeatedly determined, as reference pump, use being made of a pump used to carry out reference measurements in the development phase of the brake system in the context of a prototype of the vehicle brake system,

   • in which a statistical characteristic variable ($\left\langle U_{\mathrm{RP}}^{\mathrm{Off}} \right\rangle$) is derived from the values of the parameter ($U_{\mathrm{RP}}^{\mathrm{Off}}$) that are determined for the reference pump,
   • in which during operation of an operating pump the same parameter ($U_{\mathrm{BP}}^{\mathrm{Off}}$) is determined under corresponding stipulations,
   • in which a corresponding statistical characteristic variable ($\left\langle U_{\mathrm{BP}}^{\mathrm{Off}} \right\rangle$) is derived from the values of the parameter ($U_{\mathrm{BP}}^{\mathrm{Off}}$) that are determined for the operating pump,
   • in which at least one ratio is calculated as a measure of the deviation of the operating behavior of the operating pump from the operating behavior of the reference pump from the characteristic variable ($\left\langle U_{\mathrm{RP}}^{\mathrm{Off}} \right\rangle$) calculated for the reference pump and the characteristic variable ($\left\langle U_{\mathrm{BP}}^{\mathrm{Off}} \right\rangle$) calculated for the operating pump, and
   in which

   • with the aid of this ratio a characteristic curve ($p_{\mathrm{v}}(U_{\mathrm{BP}}^{\mathrm{Off}})$) of the operating pump is adapted to a characteristic curve ($p_{\mathrm{v}}(U_{\mathrm{RP}}^{\mathrm{Off}})$) correspondingly prescribed for the reference pump.

2. Method according to Claim 1, **characterized in that** the characteristic curves ($p_{\mathrm{v}}(U_{\mathrm{RP}}^{\mathrm{Off}})$, $p_{\mathrm{v}}(U_{\mathrm{BP}}^{\mathrm{Off}})$) represent a functional relationship between the at least one parameter ($U^{\mathrm{Off}}$) and a brake line pressure ($p_{\mathrm{v}}$) of the motor vehicle brake system (1), a pumping rate of the pump (14) and/or the temperature of the pump (14).

3. Method according to either of Claims 1 and 2, **characterized in that** it is checked whether the ratio lies outside a prescribed tolerance range, the operating pump being identified as defective in this case.

4. Method according to one of Claims 1 to 3, **characterized in that** the statistical characteristic variables ($\left\langle U_{\mathrm{RP}}^{\mathrm{Off}} \right\rangle$, $\left\langle U_{\mathrm{BP}}^{\mathrm{Off}} \right\rangle$) are determined from a histogram ($H\left\langle U_{\mathrm{RP}}^{\mathrm{Off}} \right\rangle$, $H\left\langle U_{\mathrm{BP}}^{\mathrm{Off}} \right\rangle$) of the parameter ($U^{\mathrm{Off}}$) created for the reference pump and for the operating pump, respectively.

5. Method according to Claim 4, **characterized in that** the statistical characteristic variables ($\left\langle U_{\mathrm{RP}}^{\mathrm{Off}} \right\rangle$, $\left\langle U_{\mathrm{BP}}^{\mathrm{Off}} \right\rangle$) are determined from one or more of the following parameters:

   • last voltage value ($U^{\mathrm{onL}}$) of a pulse (19) of an operating clock (19, 20) of the respective pump,
   • first voltage value ($U^{\mathrm{onF}}$) of the pulse (19'),
   • first voltage value ($U^{\mathrm{Off}}$) of an interpulse period (20) following the pulse (19),
   • differential value ($U^{\mathrm{Fall}}$) between the last voltage value ($U^{\mathrm{onL}}$ of the pulse (19) and the first voltage value ($U^{\mathrm{Off}}$) of the interpulse period (20),
   • lowest voltage value ($U^{\mathrm{Min}}$) within the interpulse period (20),
   • sum ($U^{\mathrm{Sum}}$) of the voltage values within the interpulse period (20),
   • mean voltage value ($U^{\mathrm{Aver}}$) of the voltage values within the interpulse period (20),
   • slope ($U^{\mathrm{slope}}$) of the voltage fall within the interpulse period (20),
   • difference ($U^{\mathrm{Rise}}$) between the lowest voltage value ($U^{\mathrm{Min}}$) of the interpulse period (20) and the first voltage value ($U^{\mathrm{onF}}$) of the following pulse (19'),
   • time ($t^{\mathrm{Fall}}$) up to the fall of the voltage to zero.

6. Method according to one of Claims 1 to 5, **charac-**

**terized in that**
within the scope of the stipulations an operating clock of the respective pump (14) is firmly prescribed during the measurement.

7. Method according to one of Claims 1 to 6, **characterized in that**
the at least one parameter ($U^{off}$) is normalized to a further parameter.

8. Method according to one of Claims 1 to 7, **characterized in that**
use is made, as statistical characteristic variable, of the mean value ($\left\langle U_{RP}^{off} \right\rangle$, $\left\langle U_{BP}^{off} \right\rangle$) of the values of the parameter ($U^{off}$) that are acquired for the reference pump and for the operating pump, respectively.

9. Method according to one of Claims 4 to 8, **characterized in that**
a mathematical distribution function (G) is adapted to each histogram ($H\left\langle U_{RP}^{off} \right\rangle$, $H\left\langle U_{BP}^{off} \right\rangle$).

10. Method according to Claim 9,
**characterized in that**
the mathematical distribution function is a Gaussian distribution function (G).

11. Method according to one of Claims 1 to 10, **characterized in that**
a plurality of ratios are calculated in order to form a total ratio.

12. Method according to Claim 11,
**characterized in that**
the total ratio is a weighted sum of the ratios.

13. Device for the calibration of a motor vehicle brake system (1) having a pump (14) operated in a pulsed fashion, having a control unit (7) designed to carry out the method according to one of the preceding Claims 1 to 12.

**Revendications**

1. Procédé pour l'étalonnage ou le diagnostic d'une installation de freinage de véhicule automobile (1) comprenant une pompe (14) fonctionnant de façon cadencée,

• au moins un paramètre ($U_{RP}^{Off}$), qui représente la force électromotrice de la pompe de référence, étant déterminé de façon répétée pendant le fonctionnement d'une pompe de référence dans des conditions définies, une pompe, avec laquelle des mesures de référence sont effectuées dans la phase de développement de l'installation de freinage dans le cadre d'un prototype du système de freinage de véhicule, étant utilisée comme pompe de référence,

• une caractéristique statistique $\left\langle U_{RP}^{Off} \right\rangle$
étant déduite des valeurs, déterminées pour la pompe de référence, du paramètre ($U_{RP}^{Off}$),

• le même paramètre ($U_{BP}^{Off}$) étant déterminé dans des conditions appropriées pendant le fonctionnement d'une pompe de service,

• une caractéristique statistique $\left\langle U_{BP}^{Off} \right\rangle$ appropriée étant déduite des valeurs, déterminées pour la pompe de service, du paramètre ($U_{RP}^{Off}$),),

• au moins un coefficient étant calculé comme référence pour l'écart entre le comportement de fonctionnement de la pompe de service et le comportement de fonctionnement de la pompe de référence à partir de la caractéristique $\left\langle U_{RP}^{Off} \right\rangle$ calculée pour la pompe de référence et de la caractéristique $\left\langle U_{BP}^{Off} \right\rangle$ calculée pour la pompe de service, et

• une courbe caractéristique ($p_v\left( U_{BP}^{Off} \right)$) de la pompe de service étant adaptée à l'aide de ce coefficient à une courbe caractéristique ($p_v\left( U_{RP}^{Off} \right)$) prédéfinie en conséquence pour la pompe de référence.

2. Procédé selon la revendication 1,
**caractérisé en ce que**
les courbes caractéristiques ($p_v\left( U_{RP}^{Off} \right)$,
représentent un rapport fonctionnel entre l'au moins un paramètre ($U^{off}$) et une pression de conduite de frein ($p_v$) de l'installation de freinage de véhicule (1), un taux de pompage de la pompe (14) et/ou une température de la pompe (14).

3. Procédé selon l'une quelconque des revendications 1 ou 2,
**caractérisé en ce**
**qu'**on vérifie si le coefficient se situe en dehors d'une plage de tolérance prédéfinie, la pompe de service étant reconnue comme défectueuse dans ce cas.

4. Procédé selon l'une quelconque des revendications 1 à 3,
**caractérisé en ce que**
les caractéristiques statistiques

$( \left\langle U_{RP}^{Off} \right\rangle , \quad \left\langle U_{BP}^{Off} \right\rangle )$ sont déterminées à partir d'un histogramme $(H(U_{RP}^{Off}),$

$H(U_{BP}^{Off})),$ établi pour la pompe de référence ou la pompe de service, du paramètre ($U^{Off}$).

5. Procédé selon la revendication 4,
**caractérisé en ce que**
les caractéristiques statistiques

$( \left\langle U_{RP}^{Off} \right\rangle , \quad \left\langle U_{BP}^{Off} \right\rangle )$ sont déterminées à partir d'un ou de plusieurs des paramètres suivants :

• dernière valeur de tension ($U^{onL}$) d'une impulsion (19) d'une cadence de service (19, 20) de la pompe respective,
• première valeur de tension ($U^{onF}$) de l'impulsion (19'),
• première valeur de tension ($U^{off}$) d'un espace d'impulsion (20) faisant suite à l'impulsion (19),
• différence ($U^{Fall}$) entre la dernière valeur de tension ($U^{onL}$) de l'impulsion (19) et la première valeur de tension ($U^{off}$) de l'espace d'impulsion (20),
• plus faible valeur de tension ($U^{Min}$) à l'intérieur de l'espace d'impulsion (20),
• somme ($U^{Sum}$) des valeurs de tension à l'intérieur de l'espace d'impulsion (20),
• valeur de tension moyenne ($U^{Aver}$) des valeurs de tension à l'intérieur de l'espace d'impulsion (20),
• pente ($U^{slope}$) de la baisse de tension à l'intérieur de l'espace d'impulsion (20),
• différence ($U^{Rise}$) entre la plus faible valeur de tension ($U^{Min}$) de l'espace d'impulsion (20) et la première valeur de tension ($U^{onF}$) de l'impulsion suivante (19'),
• temps ($t^{Fall}$) s'écoulant jusqu'à la baisse de tension jusqu'à zéro.

6. Procédé selon l'une quelconque des revendications 1 à 5,
**caractérisé en ce**
**qu'**une cadence de service de la pompe (14) respective est prédéfinie de façon fixe pendant la mesure dans le cadre des conditions spécifiées.

7. Procédé selon l'une quelconque des revendications 1 à 6,
**caractérisé en ce que**
l'au moins un paramètre ($U^{off}$) est normalisé en un autre paramètre.

8. Procédé selon l'une quelconque des revendications 1 à 7,
**caractérisé en ce que**
la valeur moyenne $( \left\langle U_{RP}^{Off} \right\rangle , \quad \left\langle U_{BP}^{Off} \right\rangle )$ des valeurs, enregistrées pour la pompe de référence ou pour la pompe de service, du paramètre ($U^{off}$) est utilisée comme caractéristique statistique.

9. Procédé selon l'une quelconque des revendications 4 à 8,
**caractérisé en ce**
**qu'**une fonction de répartition mathématique (G) est adaptée à chaque histogramme

$(H(U_{RP}^{Off}), H(U_{BP}^{Off})).$

10. Procédé selon la revendication 9,
**caractérisé en ce que**
la fonction de répartition mathématique est une fonction de répartition gaussienne (G).

11. Procédé selon l'une quelconque des revendications 1 à 10,
**caractérisé en ce que**
plusieurs coefficients sont calculés pour former un coefficient global.

12. Procédé selon la revendication 11,
**caractérisé en ce que**
le coefficient global est un total pondéré des coefficients.

13. Dispositif pour l'étalonnage d'une installation de freinage de véhicule automobile (1) comprenant une pompe (14) fonctionnant de façon cadencée avec une unité de commande (7) conçue pour la mise en oeuvre du procédé selon l'une quelconque des revendications précédentes 1 à 12.

Fig. 1

Fig. 2

$U_M$

E    A

19    19'

$U^{OnL}$    $U^{OnF}$

$U^{Fall}$

$U^{Rise}$

20

$U^{Off}$

$U^{Aver}$

$U^{Min}$

$U^{Sum}$

$U^{Slope}$

0

$t^{Fall}$

t

EP 2 205 469 B1

I.

21

22

II.

23

24

25

III.

26

**Fig. 3**

Fig. 4

Fig. 5

Fig. 6

EP 2 205 469 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005041556 A1

- DE 19651154 A1

**In der Beschreibung aufgeführte Nicht-Patentliteratur**

- **Dubbel.** Taschenbuch für den Maschinenbau. Springer Verlag, 2001